# FASCICULE DE BREVET EUROPEEN

(11) **EP 4 370 387 B1**
(45) Date de publication et mention de la délivrance du brevet: **02.07.2025**
(21) Numéro de dépôt: 22737881.7
(22) Date de dépôt: 28.06.2022
(51) Int. Cl.: B60T 5/00, B60T 17/04, B61H 5/00, F16D 65/00

(54) **BAGUE D'ÉTANCHÉITÉ AVEC BLOCAGE EN TRANSLATION**
DICHTRING MIT VERRIEGELUNG GEGEN TRANSLATORISCHE BEWEGUNG
SEALING RING WITH LOCKING AGAINST TRANSLATIONAL MOVEMENT

(30) Priorité: 16.07.2021 FR 2107699
(43) Date de publication de la demande: 22.05.2024
(73) Titulaire: Tallano Technologies, 75015 Paris (FR)
(72) Inventeur: ADAMCZAK, Loïc, 92100 BOULOGNE BILLANCOURT (FR); MAISTRE, Adrien, 92100 BOULOGNE BILLANCOURT (FR); BONNAUD, Pascal, 92100 BOULOGNE-BILLANCOURT (FR)
(74) Mandataire: Plasseraud IP
(86) Numéro de dépôt international: PCT/EP2022/067685
(87) Numéro de publication internationale: WO 2023/285129

(56) Documents cités:
- WO-A1-2019/025722
- FR-A1- 3 088 394
- FR-A1- 3 098 178

## Description

La présente invention concerne le freinage des matériels roulants ferroviaires et notamment les ensembles à friction des systèmes de freinage des matériels roulants ferroviaires. On entend par de tels matériels tous véhicules configurés pour rouler sur des rails, tels que trains, tramways, métropolitains.

Le système de freinage comporte généralement un disque solidaire d'une roue ou d'un essieu du matériel roulant ferroviaire. Le système de freinage comporte en outre un ensemble à friction qui comprend un porte-semelle qui supporte une semelle de friction. La semelle de friction comprend usuellement des moyens de fixation au porte-semelle et un patin frottant. Lorsqu'un conducteur actionne le système de freinage, le patin frottant de la semelle de friction vient au contact du disque pour exercer une force de freinage sur le disque. Ainsi, par frottement, la semelle de friction freine le disque solidaire de la roue ou de l'essieu. Généralement, le matériel roulant ferroviaire comporte deux ensembles à friction, disposés de part et d'autre du disque de façon à prendre en tenaille, ou autrement dit en sandwich le disque pour le comprimer des deux côtés. Le patin frottant de la semelle de friction comporte habituellement un matériau métallique, tel que la fonte, un matériau fritté ou un matériau composite. Ainsi, lorsque le patin frottant de la semelle de friction frotte contre le disque, des particules de matière issues du patin frottant et du disque sont émises dans l'atmosphère ambiante autour de l'ensemble à friction. Ainsi, le système de freinage émet une pollution atmosphérique sous forme de particules plus ou moins fines.

On a donc cherché à capter les particules de matière émises lors du freinage, notamment en disposant un dispositif d'aspiration, alimenté par une pompe, à proximité d'une zone d'émission des particules issues du patin frottant de la semelle de friction. De plus, on a cherché à ce que cette aspiration des particules soit la plus efficace possible.

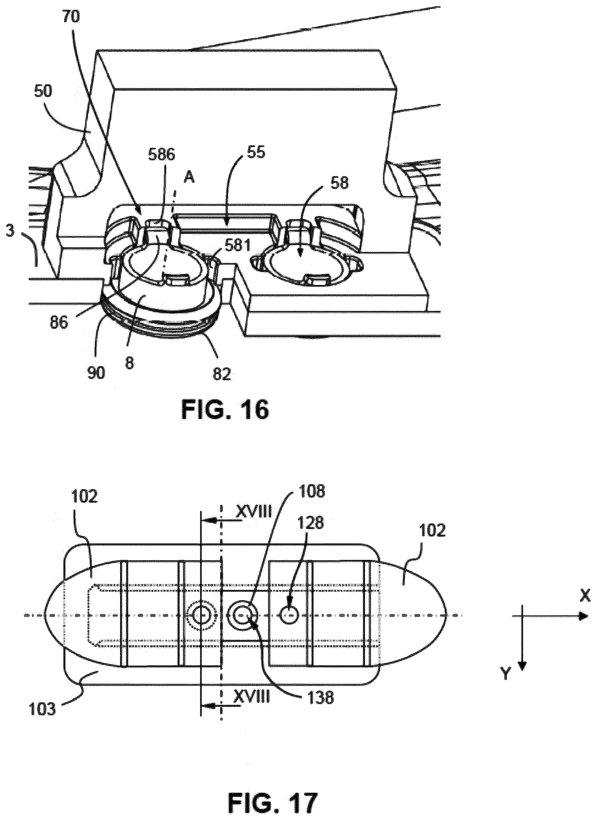

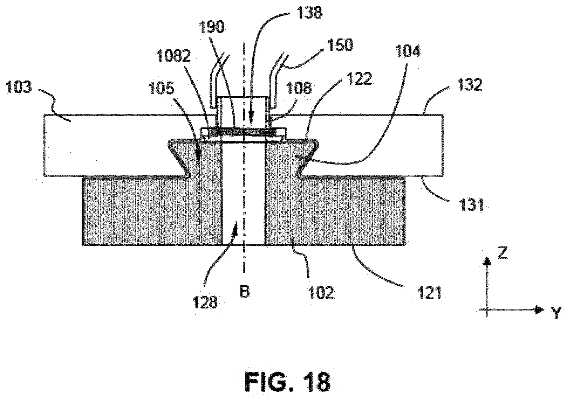

Une solution pour résoudre ce problème est l'ensemble à friction illustré en figures 17 et 18, qui représente l'art antérieur. Cet art antérieur est décrit dans le document FR 3088394. La figure 17 est une vue de dessous de cet ensemble, et la figure 18 est une coupe transversale selon la ligne XVIII-XVIII de la figure 17.

Le porte-semelle 103 s'étend longitudinalement selon une direction longitudinale X, et transversalement selon une direction transversale Y. Le plan X-Y est horizontal. La direction Z, perpendiculaire au plan X-Y pour former un repère (X,Y,Z), est verticale, orientée vers le haut. Le porte-semelle 103 comporte une face inférieure 131 destinée à accueillir une semelle de friction 102, et une face supérieure 132, qui s'étendent chacune parallèlement au plan X-Y.

Le porte-semelle 103 présente sur sa face inférieure 131 une glissière d'accueil 105 concave en queue d'aronde, qui s'étend longitudinalement depuis une première extrémité du porte-semelle 103 jusqu'à proximité de la seconde extrémité du porte-semelle 103 où cette glissière est non-débouchante. Le porte-semelle 103 comprend sur l'axe longitudinal X deux conduits secondaires 138 espacés. Chaque conduit secondaire 138 relie la face supérieure 132 au fond de la glissière 105 sur la face supérieure.

La semelle de friction 102 est en deux parties identiques, où chaque partie présente une face de friction 121 destinée à être en contact de friction avec le disque (non-représenté) du véhicule et une face opposée 122. Cette face opposée 122 présente un profilé 104 convexe en queue d'aronde configuré pour coopérer avec la glissière d'accueil 105. En utilisation, on enfonce une première partie de la semelle 102 selon l'axe longitudinal X en faisant coulisser le profilé 104 dans la glissière 105, jusqu'en butée de la glissière 105. Puis on enfonce la seconde partie de la semelle 102 selon l'axe longitudinal X en faisant coulisser le profilé 104 dans la glissière 105, jusqu'en butée de la première partie de la semelle 102, les surfaces en contact de la première partie et de la seconde partie étant idéalement conformées pour s'épouser sur toute leur surface.

Chacune des parties de la semelle 102 comprend un conduit primaire 128 orienté selon l'axe vertical Z. Lorsque ces parties sont fixées sur le porte-semelle 103 en utilisation, chacun des deux conduits primaires 128 est situé en regard d'un conduit secondaire 138. On désigne par axe B l'axe principal d'un conduit primaire 128 et du conduit secondaire 138 situé en regard, ce conduit primaire 128 et ce conduit secondaire 138 étant donc coaxiaux. Ainsi, chaque conduit primaire 128 forme, avec un des conduits secondaires 138 ménagé dans le porte-semelle 103, un circuit qui permet d'aspirer des particules émises par la semelle de friction 102 lors du freinage. L'axe B est donc parallèle à l'axe vertical Z.

Une bague de jonction 108, constituée d'un tube et d'une collerette 1082 prolongeant radialement et vers l'extérieur ce tube à une de ses extrémités, est montée dans le conduit secondaire 138. Le tube est inséré dans le conduit secondaire 138, le diamètre externe du tube étant égal au diamètre interne du conduit secondaire 138 afin d'assurer la meilleure étanchéité possible. La collerette 1082 se loge dans un logement annulaire du porte-semelle 103, ce logement étant centré sur l'axe principal B et en regard de la face opposée 122 de la semelle 102. Le logement annulaire a un diamètre supérieur à celui du conduit secondaire 138 et inférieur à celui de la collerette 1082. Ainsi, la collerette 1082 est prise en sandwich entre le profilé de la semelle 102 et le fond de la glissière 105 du porte-semelle 103. Une fois dans son logement, la collerette 1082 est en contact avec la face 122 du profilé 104 de la semelle 102. Ce contact est réalisé par exemple par déformation (écrasement) de la collerette 1082 entre le fond du logement et la face 122. Alternativement (comme représenté en figure 18, ce contact est réalisé par compression d'un ressort hélicoïdal monté sur le tube entre la collerette 1082 et le fond du logement. Ainsi, la collerette 1082 elle-même, ou le ressort hélicoïdal, est un mécanisme de rappel 190 qui permet de plaquer la collerette 1082 contre le profilé 104 (voir ci-dessous).

La bague de jonction 108 traverse entièrement le porte-semelle 103 et en dépasse sur sa face supérieure 132 à sa face inférieure 131 munie de la glissière 105. Sur cette extrémité du tube de la bague 108 est fixé un tuyau 150 qui est relié à un dispositif d'aspiration (non-représenté) et qui permet l'aspiration au travers du conduit primaire 128 et du conduit secondaire 138 des particules issues du freinage du véhicule ferroviaire par usure de la semelle 102. Le tuyau 150 et le dispositif d'aspiration constituent un dispositif d'évacuation des particules.

La bague de jonction 108 sert à guider les particules issues du freinage depuis le conduit primaire 128 de la semelle 102 vers le conduit secondaire 138 du porte-semelle 103. La bague de jonction 108 vise donc à prévenir d'éventuelles fuites au travers du conduit primaire 128 et du conduit secondaire 138. Notamment, la bague de jonction 108 vise à limiter la quantité de particules issues du freinage qui pourraient se glisser dans l'interstice à l'interface entre la semelle de friction 102 et le porte-semelle 103, et surtout à empêcher un flux d'air provenant de l'extérieur de pénétrer par cet interstice dans le conduit secondaire 138, ce qui dégraderait l'aspiration par le dispositif d'aspiration.

De plus, la bague de jonction 108 est plaquée contre le profilé 104 à l'aide d'un mécanisme de rappel 190, comme indiqué ci-dessus. Ce mécanisme de rappel 190 prévient efficacement un passage d'air à l'interface entre la semelle 102 et le porte-semelle 103 au niveau du conduit primaire 128 et du conduit secondaire 138, ce passage d'air étant dû à des jeux à l'interface entre le porte-semelle 103 et la semelle 102.

La bague 108 doit être bloquée en translation dans les deux directions selon l'axe B, afin d'être solidarisée avec le porte-semelle 103. Ce blocage est réalisé dans une direction par la collerette 1082 à l'extrémité inférieure de la bague 108. Ce blocage est réalisé dans l'autre direction par fixation de l'extrémité supérieure de la bague 108 sur le tuyau 150 qui est relié au dispositif d'aspiration. La bague 108 est en deux parties. Après la fixation de la partie supérieure de la bague 108 sur le tuyau 150, et l'insertion de la partie inférieure de la bague 108 dans le conduit secondaire 138, la partie supérieure et la partie inférieure de la bague sont solidarisées, par exemple par vissage, par soudage, ou par tout autre moyen approprié.

Cependant ce blocage bidirectionnel en translation implique d'avoir accès aux deux extrémités de la bague 108. Or, dans certaines configurations, le dispositif d'aspiration, qui est par exemple un bloc pneumatique, fait partie intégrante du porte-semelle 103.

Ainsi, on a un ensemble à friction pour système de freins pour matériel roulant ferroviaire, l'ensemble à friction comprenant d'une part un porte-semelle comprenant une face inférieure, et une face supérieure, et d'autre part au moins une semelle en matériau de friction comprenant une première face qui est la face de friction, et une seconde face qui est apte à être fixée sur la face inférieure par un mécanisme de fixation, la semelle comprenant au moins un conduit primaire reliant la première face et la seconde face, le porte-semelle comprenant au moins un conduit secondaire d'axe central B, le au moins un conduit primaire étant apte à être aligné avec un du au moins un conduit secondaire, et au moins une bague de jonction agencée dans le conduit secondaire et établissant une jonction avec le conduit primaire, l'ensemble à friction comprenant en outre un bloc relié à un dispositif d'aspiration, ce bloc faisant partie intégrante du porte-semelle au niveau de la face supérieure.

Dans cette configuration une extrémité de la bague 108 (extrémité supérieure, du côté du dispositif d'aspiration) n'est pas accessible. Le montage de la bague 108 sur le porte-semelle 103 n'est alors pas possible.

### Description de l'invention

La présente invention vise à remédier à ces inconvénients.

L'invention vise à proposer un ensemble à friction pour système de freins ferroviaire dans lequel le bloc qui est relié à un système d'aspiration, par exemple un bloc pneumatique, fait partie intégrante du porte-semelle, qui permette un montage sur le porte-semelle d'une bague de jonction qui permette une évacuation des particules émises par usure de la semelle vers le dispositif d'aspiration.

Ce but est atteint grâce au fait que le bloc présente une cavité et au moins un trou qui relie la cavité et la face supérieure et qui est aligné avec le au moins un conduit secondaire et dans lequel la bague de jonction est apte à coulisser, la cavité étant reliée par un circuit au dispositif d'aspiration, et en ce qu'il comporte un mécanisme de solidarisation de la au moins une bague de jonction avec le bloc lorsque la au moins une bague de jonction est agencée dans le au moins un trou et dans le au moins un conduit secondaire.

Grâce à ces dispositions, chaque bague de jonction est apte à être insérée dans le trou et dans le conduit secondaire de façon à mettre en communication la semelle avec le dispositif d'aspiration. La bague de jonction est alors solidarisée avec le bloc par le mécanisme de solidarisation. Ainsi, la bague et est maintenue solidaire avec le porte-semelle de telle sorte qu'en fonctionnement l'évacuation des particules provenant de la semelle vers le dispositif d'aspiration est réalisée de façon fiable.

Par exemple, la au moins une bague de jonction comporte un corps et une collerette à une première extrémité du corps, l'extrémité distale du corps portant des languettes qui s'étendent radialement vers l'extérieur dans la cavité, et dans lequel le mécanisme de solidarisation comprend la collerette, les languettes et le bord interne du au moins un trou de la cavité.

Ainsi, la solidarisation de la ou des bagues de jonction avec le bloc s'effectue par un simple encliquetage.

Par exemple, la au moins une bague de jonction comporte un corps et une collerette à une première extrémité du corps, l'extrémité distale du corps portant des languettes qui sont déformées plastiquement radialement vers l'extérieur dans la cavité, et dans lequel le mécanisme de solidarisation comprend la collerette, les languettes et le bord interne du au moins un trou de la cavité.

Ainsi, la désolidarisation de la ou des bagues de jonction avec le bloc, grâce à la déformation plastique des languettes, est moins facile.

Par exemple, la au moins une bague de jonction comporte un corps et une collerette à une première extrémité du corps, l'extrémité distale du corps portant au moins une protubérance qui s'étend radialement vers l'extérieur dans la cavité, dans lequel le au moins un trou porte au moins une rainure dans lequel la au moins une protubérance est apte à coulisser, dans lequel le bord interne du au moins un trou de la cavité comporte un logement apte à recevoir la protubérance et dans lequel le mécanisme de solidarisation comprend la collerette, la protubérance et le logement.

Ainsi, la solidarisation de la ou des bagues de jonction avec le bloc s'effectue par un mouvement de baïonnette de la bague, et est amovible en effectuant le mouvement inverse.

Par exemple, l'ensemble à friction comporte en outre un mécanisme de rappel qui est apte à plaquer la bague contre la seconde face.

Ainsi, l'étanchéité entre les bagues de jonction et la semelle, sur le trajet d'évacuation des particules libérées par la semelle, est améliorée.

Par exemple, le mécanisme de fixation comporte une glissière d'accueil qui est formé sur la face inférieure, et un profilé qui est formé sur la seconde face et qui est configuré pour coopérer avec la glissière d'accueil.

Ainsi, la fixation de la semelle sur le porte-semelle est facilitée puisqu'elle s'effectue par coulissement, et en outre est amovible.

L'invention concerne également un procédé pour solidariser une bague de jonction montée sur un porte-semelle avec un bloc relié à un dispositif d'aspiration, le porte-semelle comprenant une face inférieure, une face supérieure, et au moins un conduit secondaire (38) d'axe central A, le bloc faisant partie intégrante du porte-semelle au niveau de la face supérieure, le porte-semelle et la bague de jonction faisant partie d'un ensemble à friction pour système de freins pour matériel roulant ferroviaire, l'ensemble à friction comprenant en outre une semelle en matériau de friction comprenant une première face qui est la face de friction, une seconde face qui est apte à être fixée sur la face inférieure par un mécanisme de fixation, et au moins un conduit primaire qui relie la première face et la seconde face, la au moins une bague de jonction étant agencée dans le au moins un conduit secondaire et établissant une jonction avec le au moins un conduit primaire lorsque le au moins un conduit primaire est aligné avec un du au moins un conduit secondaire.

Selon l'invention, le procédé comprend les étapes suivantes :
(a) On munit le bloc d'une cavité qui est relié par un circuit au dispositif d'aspiration, d'au moins un trou qui relie la cavité et la face supérieure et qui est aligné avec le au moins un conduit secondaire et dans lequel la au moins une bague de jonction est apte à coulisser ;
(b) On agence la au moins une bague de jonction dans le au moins un trou et dans le au moins un conduit secondaire par coulissement selon l'axe A depuis la face inférieure;
(c) On solidarise la au moins une bague de jonction avec le bloc au moyen d'un mécanisme de solidarisation;
(d) On assemble la semelle sur le porte-semelle jusqu'à ce que la semelle recouvre la au moins une bague de jonction.

Par exemple, la au moins une bague de jonction comporte un corps et une collerette à une première extrémité du corps, l'extrémité distale du corps portant des languettes qui s'étendent radialement vers l'extérieur dans leur position de repos, de telle sorte que, à l'étape (b), les languettes se rapprochent les unes des autres de façon élastique lorsque le corps coulisse dans ledit au moins un trou et dans ledit au moins un conduit secondaire, et tel que, à l'étape (c), les languettes reprennent leurs positions au repos et sont aptes à prendre appui contre le bord interne du au moins un trou de la cavité, le mécanisme de solidarisation comprenant la collerette, les languettes et le bord interne du au moins un trou.

Par exemple, la au moins une bague de jonction comporte un corps et une collerette à une première extrémité du corps, l'extrémité distale du corps portant des languettes qui s'étendent sensiblement dans le prolongement du corps dans leurs positions au repos, de telle sorte que, à l'étape (b), le corps coulisse librement dans le au moins un trou et dans le au moins un conduit secondaire, et tel que, à l'étape (c), on écrase les languettes contre le fond de la cavité de telle sorte que les languettes sont déformées plastiquement radialement vers l'extérieur et sont aptes à prendre appui contre le bord du au moins un trou de la cavité, le mécanisme de solidarisation comprenant la collerette, les languettes et le bord interne du au moins un trou.

Par exemple, la au moins une bague de jonction comporte un corps et une collerette à une première extrémité du corps, l'extrémité distale du corps portant au moins une protubérance qui s'étend radialement vers l'extérieur, et le au moins un trou portant au moins une rainure dans lequel la au moins une protubérance est apte à coulisser, et le bord interne du au moins un trou de la cavité comportant un logement apte à recevoir la au moins une protubérance de telle sorte que, à l'étape (b), le corps coulisse librement dans le au moins un trou et dans le au moins un conduit secondaire jusqu'à ce que l'extrémité distale du corps émerge dans la cavité, et tel que, à l'étape (c), on pivote la bague autour de l'axe principal A jusqu'à ce qu'une de ladite au moins une protubérance se situe en regard du logement, puis on coulisse la bague en sens inverse jusqu'à ce qu'une de la au moins une protubérance se loge dans le logement et prenne appui contre le fond du logement, le mécanisme de solidarisation comprenant la collerette, la protubérance et le logement.

L'invention sera bien comprise et ses avantages apparaîtront mieux, à la lecture de la description détaillée qui suit, de modes de réalisation représentés à titre d'exemples non limitatifs. La description se réfère aux dessins annexés sur lesquels :
[Fig. 1] La figure 1 est une vue en perspective et en coupe longitudinale dans le plan (X, Z) d'un ensemble à friction selon un premier mode de réalisation de l'invention, avec la semelle assemblée avec le porte-semelle ;
[Fig. 2] La figure 2 est une vue en coupe dans le plan (X, Z) de la région de l'ensemble à friction qui comprend le bloc, selon un premier mode de réalisation de l'invention, avant la solidarisation des bagues avec le bloc.
[Fig. 3] La figure 3 est une vue en coupe dans le plan (X, Z) de la région de l'ensemble à friction qui comprend le bloc, selon un premier mode de réalisation de l'invention, à une étape ultérieure de l'étape de la figure 2.
[Fig. 4] La figure 4 est une vue en coupe dans le plan (X, Z) de la région de l'ensemble à friction qui comprend le bloc, selon un premier mode de réalisation de l'invention, à une étape ultérieure de l'étape de la figure 3.
[Fig. 5] La figure 5 est une vue en coupe dans le plan (X, Z) de la région de l'ensemble à friction qui comprend le bloc, selon un premier mode de réalisation de l'invention, après la solidarisation des bagues avec le bloc.
[Fig. 6] La figure 6 est une vue en coupe dans le plan (X, Z) d'une portion de l'ensemble à friction 1 illustré en figure 1.
[Fig. 7] La figure 7 est une vue en coupe dans le plan (X, Z) de la région de l'ensemble à friction qui comprend le bloc, selon un premier mode de réalisation de l'invention, qui montre la désolidarisation des bagues d'avec le bloc.
[Fig. 8] La figure 8 est une vue en coupe dans le plan (X, Z) de la région de l'ensemble à friction qui comprend le bloc, selon un deuxième mode de réalisation de l'invention, avant la solidarisation des bagues avec le bloc.
[Fig. 9] La figure 9 est une vue en coupe dans le plan (X, Z) de la région de l'ensemble à friction qui comprend le bloc, selon un deuxième mode de réalisation de l'invention, à une étape ultérieure de l'étape de la figure 8.
[Fig. 10] La figure 10 est une vue en coupe dans le plan (X, Z) de la région de l'ensemble à friction qui comprend le bloc, selon un deuxième mode de réalisation de l'invention, à une étape ultérieure de l'étape de la figure 9.
[Fig. 11] La figure 11 est une vue en coupe dans le plan (X, Z) de la région de l'ensemble à friction qui comprend le bloc, selon un deuxième mode de réalisation de l'invention, après la solidarisation des bagues avec le bloc.
[Fig. 12] La figure 12 est une vue en coupe dans le plan (X, Z) de la région de l'ensemble à friction qui comprend le bloc, selon un deuxième mode de réalisation de l'invention, qui montre la désolidarisation des bagues d'avec le bloc.
[Fig. 13] La figure 13 est une vue en perspective et en coupe partielle dans le plan (X, Z) de la région de l'ensemble à friction qui comprend le bloc, selon un troisième mode de réalisation de l'invention, avant la solidarisation des bagues avec le bloc.
[Fig. 14] La figure 14 est une vue en perspective et en coupe partielle dans le plan (X, Z) de la région de l'ensemble à friction qui comprend le bloc, selon un troisième mode de réalisation de l'invention, à une étape ultérieure de l'étape de la figure 13.
[Fig. 15] La figure 15 est une vue en perspective et en coupe partielle dans le plan (X, Z) de la région de l'ensemble à friction qui comprend le bloc, selon un troisième mode de réalisation de l'invention, à une étape ultérieure de l'étape de la figure 14.
[Fig. 16] La figure 16 est une vue en perspective et en coupe partielle dans le plan (X, Z) de la région de l'ensemble à friction qui comprend le bloc, selon un troisième mode de réalisation de l'invention, après la solidarisation des bagues avec le bloc.
[Fig. 17] La figure 17, déjà décrite, est une vue de dessous d'un ensemble à friction selon l'art antérieur ;
[Fig. 18] La figure 18, déjà décrite, est une coupe transversale selon la ligne XVIII-XVIII de la figure 17.

### Description détaillée de l'invention

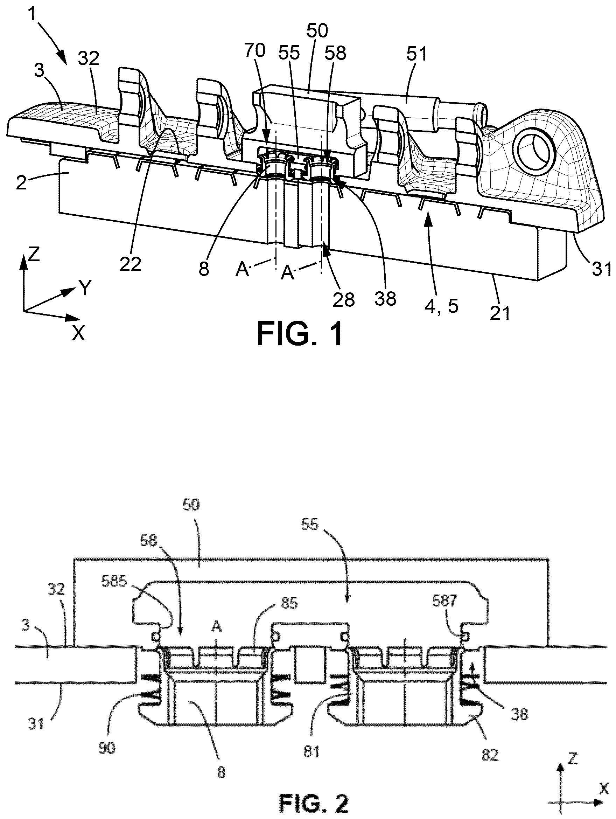

La figure 1 illustre un ensemble à friction 1 pour système de freins pour matériel roulant ferroviaire. Par exemple ces freins sont des freins à disque. Par exemple ces freins sont des freins sur une bande de roulement de la roue du matériel roulant. L'ensemble s'étend longitudinalement selon un axe longitudinal X, et verticalement selon un axe vertical Z. L'axe transversal Y forme un repère trigonométrique avec les axes X et Z. L'ensemble à friction 1 est représenté en perspective. Par souci de clarté, l'ensemble est représenté en coupe dans le plan vertical (X, Z), c'est-à-dire dans le plan qui passe par les axes centraux A des conduits secondaires 38.

L'ensemble à friction 1 comprend d'une part un porte-semelle 3, et d'autre part au moins une semelle 2 en matériau de friction. Le porte-semelle 3 présente une face inférieure 31, et une face supérieure 32. La semelle 2 présente une première face 21 qui est la face de friction, et une seconde face 22. En fonctionnement, la semelle 2 est solidarisée avec le porte-semelle 3 par un mécanisme de fixation (4, 5). Par exemple, ce mécanisme de fixation comporte une glissière d'accueil 5 qui est formé sur la face inférieure 31, et un profilé 4 qui est formé sur la seconde face 22 et qui est configuré pour coopérer avec la glissière d'accueil 5. Ainsi, la solidarisation de la semelle 2 avec le porte-semelle 3 est réalisée par insertion et translation du profilé 4 dans la glissière 5 selon l'axe longitudinal X. Le mécanisme de fixation est alors tel que cette solidarisation est amovible. D'une manière générale, la solidarisation de la semelle 2 avec le porte-semelle 3 est amovible, ce qui permet un remplacement de la semelle 2 une fois usée.

La semelle 2 comprend au moins un conduit primaire 28 reliant de façon étanche la première face 21 et la seconde face 22. En figure 1, la semelle 2 comprend deux conduits primaires 28. Le porte-semelle 3 comprend au moins un conduit secondaire 38 d'axe central A qui relie de façon étanche la face supérieure 32 et la face inférieure 31 au niveau du fond de la glissière d'accueil 5. En figure 1, le porte-semelle 3 comprend deux conduits secondaires 38. Le porte-semelle 3 comprend au moins une bague de jonction 8 agencée dans le au moins un conduit secondaire 38 et établissant une jonction avec le au moins un conduit primaire 28. En figure 1, le porte-semelle 3 comprend deux bagues de jonction 8. Lorsque la semelle 2 est solidarisée avec le porte-semelle 3, chaque conduit primaire 28 est aligné avec un conduit secondaire 38, c'est-à-dire que l'axe central de chaque conduit primaire 28 est l'axe central A du conduit secondaire 38 avec lequel il est aligné.

Une bague de jonction 8 comporte un corps 81 tubulaire et une collerette 82 à une extrémité de ce corps 81. La collerette 82 s'étend radialement vers l'extérieur depuis le corps 81, et présente donc un diamètre supérieur au diamètre externe du corps 81. Par exemple le diamètre interne du corps 81 est supérieur au diamètre d'un conduit primaire 28 afin de compenser les jeux entre la semelle 2 et le porte-semelle 3 selon l'axe X. L'extrémité distale du corps 81 se situe donc à l'opposé de la collerette 82.

Dans la description ci-dessous on utilise l'article pluriel « des » devant les éléments « conduits primaires 28 », « conduits secondaires 38 », « bagues de jonction 8 », « trous 58 », et le déterminant « chaque », pour traiter les cas de deux ou plus de ces éléments. La description ci-dessous est également valable dans le cas d'un seul conduit primaire 28, d'un seul conduit secondaire 38, d'une seule bague de jonction 8 et d'un seul trou 58.

L'ensemble à friction 1 comprend en outre un bloc 50 qui fait partie intégrante du porte-semelle 3 au niveau de la face supérieure 32. Par exemple ce bloc 50 est un bloc pneumatique. Par « faire partie intégrante », on entend que le bloc 50 n'est pas séparable du porte semelle 3, sauf avec des outils. Par exemple, le bloc 50 est moulé avec le porte-semelle 3, ou est soudé avec le porte-semelle 3. Le bloc 50 recouvre la face supérieure 32 du porte-semelle 3 au niveau de la portion de la face supérieure 32 qui comporte les orifices des conduits secondaires 38. Le bloc 50 comporte une cavité 55 qui est reliée à un circuit 51 qui est relié à un dispositif d'aspiration. Le bloc 50 comporte des trous 58 qui relient la cavité 55 et la face supérieure 32, chacun des trous 58 étant situé en regard d'un des conduits secondaires 38. Comme illustré en figure 1, le bloc 50 comporte donc deux trous 58. Le bloc 50 faisant partie intégrante du porte-semelle 3, une bague 8 ne peut pas être insérée dans un conduit secondaire 38 par la face supérieure 32.

Chaque bague 8 peut être insérée dans un conduit secondaire 38 uniquement par la face inférieure 31, avant solidarisation de la semelle 2 avec le porte-semelle 3. Ainsi, le corps 81 d'une bague 8 est insérée dans un conduit secondaire 38, la collerette 82 se situant du côté de la face inférieure 31. Le diamètre de la collerette 82 est égal ou légèrement inférieur au diamètre du conduit secondaire 38. Le diamètre de chacun des trous 58 est égal ou légèrement supérieur au diamètre externe du corps 81, et inférieur au diamètre de la collerette 82. Ainsi, lorsque la bague 8 est insérée dans le conduit secondaire 38, la collerette 82 vient en butée contre le bord du trou 58 qui est situé en regard du conduit secondaire 38, soit directement, soit indirectement, comme expliqué ci-dessous.

Dans le cas d'un contact indirect, un ressort (par exemple un ressort hélicoïdal) est monté sur le corps 81 entre la collerette 82 et le bord du trou 58. Au repos, le ressort est en contact avec la collerette 82 et le bord du trou 58, et la collerette 82 dépasse de la face inférieure 31 (par exemple au niveau du fond de la glissière 5 si cette glissière 5 est présente). Lorsque la semelle 2 est solidarisée avec le porte-semelle 3 (par exemple par coulissement du profilé 4 de la semelle 2 dans la glissière 5) la seconde face 22 est au contact de la face inférieure 31, la collerette 82 est repoussée dans le conduit secondaire 38 et comprime le ressort. Cette solution est représentée en figure 1.

Dans le cas d'un contact direct entre la collerette 82 et le bord du trou 58, la collerette 82 est conformée de telle sorte que, non déformée, elle dépasse de la face inférieure 31. Lorsque la semelle 2 est solidarisée avec le porte-semelle 3, la collerette 82 est déformée entre la seconde face 22 et le bord du trou 58. Cette déformation est par exemple une compression selon l'axe A du matériau de la collerette. Alternativement, la collerette 82 présente au repos une forme convexe ou concave, et cette déformation est un aplatissement de la collerette 82. Dans tous les cas d'un contact direct, la déformation de la collerette 82 remplit en outre une fonction d'étanchéité entre la bague 8 et la seconde face 22.

Dans les deux cas de contact (direct ou indirect), la collerette 82 est maintenue en appui contre la seconde face 22 de la semelle 2. Ce maintien est réalisé soit par déformation de la collerette 82 elle-même, soit par compression du ressort, qui constituent donc chacun un mécanisme de rappel 90 qui permet de plaquer la collerette 82 contre la seconde face 22. D'autres mécanismes de rappel 90 remplissant la même fonction peuvent être utilisés.

La collerette 82 réalise donc un blocage en translation de la bague 8 dans le conduit secondaire 38 selon l'axe A dans une direction, à savoir la direction vers le haut sur les figures (déplacement de la bague 8 vers le haut).

L'ensemble à friction 1 comporte un mécanisme de solidarisation 70 des bagues de jonction 8 avec le bloc 50 lorsque chacune des bagues de jonction 8 est agencée dans un trou 58 et dans un conduit secondaire 38. Ainsi, lorsqu'une bague de jonction 8 est enfoncée dans le trou 58 vers le haut jusqu'à ce que son extrémité distale débouche dans la cavité 55, ce mécanisme de solidarisation 70 empêche la bague de jonction 8 de se translater en direction inverse, c'est-à-dire vers le bas. La bague de jonction 8 est donc bloquée en position de solidarisation avec le bloc 50 et ne peut pas ressortir du trou 58.

On décrit maintenant différents modes de réalisation de ce mécanisme de solidarisation 70 et du procédé de solidarisation de chaque bague de jonction 8 avec le bloc 50.

Dans chacun des modes de réalisation de ce procédé, la première étape (étape (a)) consiste à munir le bloc 50 d'une cavité 55, d'un ou plusieurs trous 58 reliant cette cavité 55 et la face supérieure 32 et situés chacun en regard d'un conduit secondaire 38 du porte-semelle 30 et dans lequel une bague 8 est apte à coulisser, et d'un circuit 51 qui relie cette cavité 55 au dispositif d'aspiration.

Selon un premier mode de réalisation, illustré en figures 1 à 7, l'extrémité distale du corps 81 porte des languettes 85 qui, au repos, s'étendent radialement vers l'extérieur. Par exemple, les languettes 85 sont venues de moulage. Par exemple, les languettes 85 peuvent être usinées et mises en forme par pliage. Les figures 2 à 5 et 7 sont des vues en coupe dans le plan (X, Z) de la région de l'ensemble à friction 1 qui comprend le bloc 50. Par souci de clarté, la semelle 2 n'est pas représentée sur les figures 2 à 5 et 7.

Ainsi, le mécanisme de solidarisation 70 comprend la collerette 82, les languettes 85 et le bord interne du trou 58 de la cavité 55. On désigne par « bord interne » le bord d'un trou 58 qui est situé à l'intérieur de la cavité 55. Le fonctionnement du mécanisme de solidarisation est expliqué ci-après.

Dans chaque trou 58, et dans chaque conduit secondaire 38 aligné avec ce trou 58, on insère une bague de jonction 8 par coulissement selon l'axe A de ce trou 58. Cette insertion s'effectue depuis la face inférieure 31 du porte-semelle, vers le haut sur les figures, et constitue la deuxième étape (étape (b)).

La figure 2 illustre la situation où les bagues de jonction 8 sont insérées dans les conduits secondaires 38 et commencent à être insérées dans les trous 58. Les extrémités distales des languettes 85 sont au contact avec le bord externe des trous 58. On désigne par « bord externe » le bord d'un trou 58 qui est situé à l'extérieur du bloc 50, c'est-à-dire en regard du conduit secondaire 38.

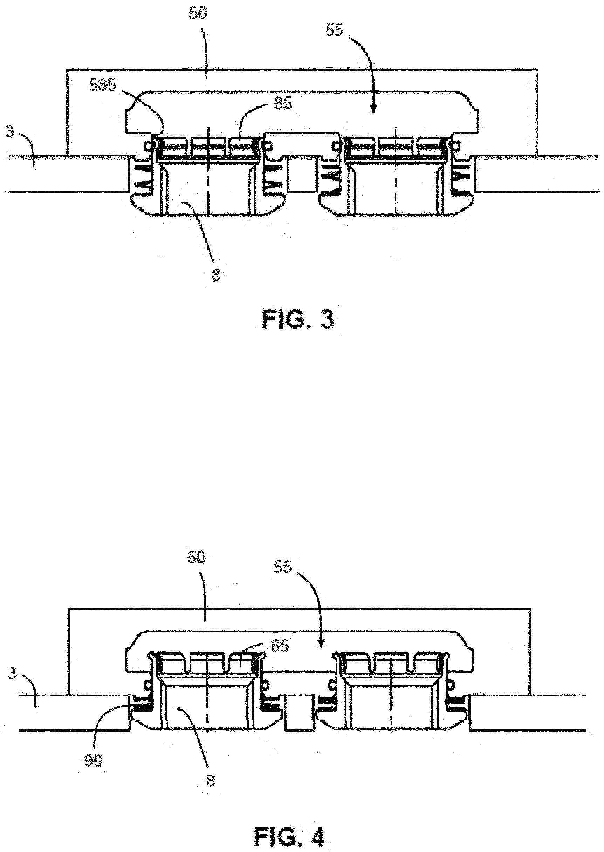

La figure 3 illustre la situation où les bagues de jonction 8 sont insérées dans les trous 58. En pénétrant dans un trou 58, les extrémités des languettes 85 sont repoussées radialement vers l'axe central longitudinal de la bague de jonction 8 par la paroi latérale 585 du trou 58. Cette déformation des languettes 85 est dans leur domaine de déformation élastique. Avantageusement, le bord externe de chaque trou 58 est évasé vers l'extérieur du trou 58 de façon à aider les languettes 85 à être repoussées radialement vers l'axe central de la bague de jonction. Durant la translation de la bague de jonction 8 dans le trou 58, les languettes 85 coulissent le long de cette paroi latérale 585 depuis le bord externe jusqu'au bord interne du trou 58.

La figure 4 illustre la situation où l'extrémité distale de chaque bague de jonction 8 émerge dans la cavité 55. Grâce à leur élasticité, les languettes 85 se déforment alors radialement vers l'extérieur pour reprendre leur position initiale (position au repos).

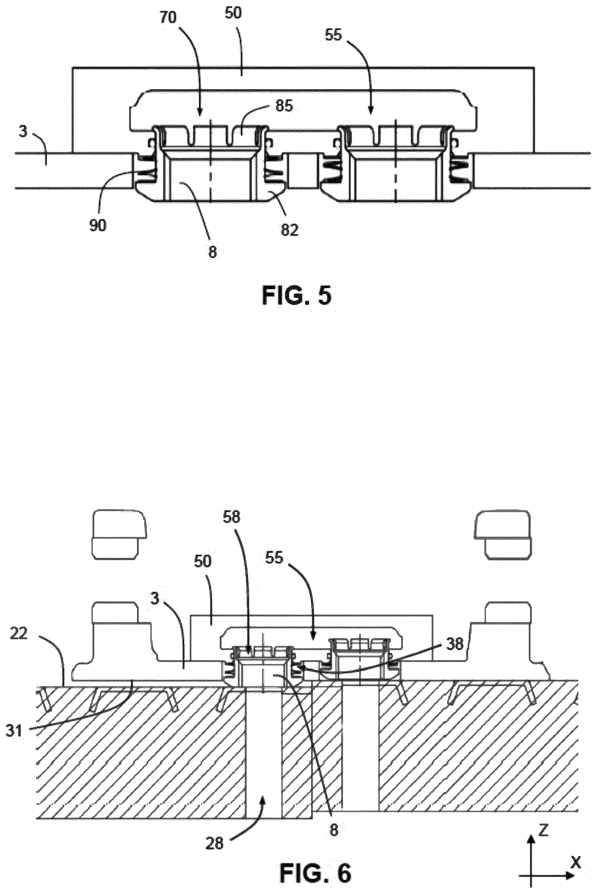

La figure 5 illustre la situation où chacune des bagues de jonction 8 est redescendue jusqu'à ce que les extrémités distales des languettes 85 viennent en contact avec le bord interne d'un trou 58. Ces extrémités distales étant recourbées radialement vers l'extérieur, elles appuient sur le bord interne et empêchent une sortie des bagues de jonction 8 des trous 58 (étape (c), troisième étape). Les languettes 85 et le bord interne du trou 58 font donc partie du mécanisme de solidarisation 70.

Avantageusement, l'ensemble à friction 1 comporte un mécanisme de rappel 90 (dans le cas illustré sur les figures ce mécanisme est un ressort autour de la bague de jonction 8 qui est situé entre la collerette 82 et le bord externe du trou 58. Par exemple ce ressort est hélicoïdal). Lorsque l'extrémité distale d'une bague de jonction 8 émerge dans la cavité 55, ce mécanisme de rappel 90 est activé (le ressort est comprimé) de telle sorte qu'il tend à faire ressortir la bague de jonction 8 du trou 58, c'est-à-dire à pousser la bague de jonction 8 vers le bas, comme illustré en figure 5. La collerette 82 de chaque bague de jonction 8 émerge alors en partie au niveau de la face inférieure 31 du porte-semelle 3.

Lors d'une quatrième étape (étape (d)), on assemble la semelle 2 sur le porte-semelle 3 jusqu'à ce que la semelle 2 recouvre chacune des bagues de jonction 8. Cette situation est illustrée en figure 6, dans le cas où la semelle comporte deux moitiés. La figure 6 est une vue en coupe dans le plan (X, Z) d'une portion de l'ensemble à friction 1 illustré en figure 1. Sur la partie droite de la figure 6, la moitié droite de la semelle 2 est plaquée contre le porte-semelle 3 de telle sorte que la seconde face 22 de cette moitié droite est en contact avec la face inférieure 31 du porte-semelle 3. Sur la partie gauche de la figure 6, il existe un jeu entre la moitié gauche de la semelle 2 et le porte-semelle 3 de telle sorte que la seconde face 22 de cette moitié gauche n'est pas en contact avec la face inférieure 31 du porte-semelle 3. Dans tous les cas, le mécanisme de rappel 90 plaque la bague de jonction 8 contre la seconde face 22 de la semelle 2, et les l'extrémités distales des bagues de jonction 8 sont dans la cavité 55.

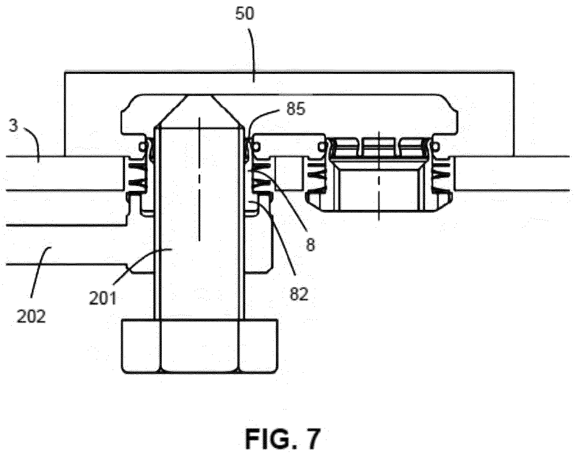

La figure 7 illustre une méthode pour désolidariser une bague de jonction 8 d'avec le bloc 50. On visse une tige filetée 201 dans le trou de la bague de jonction 8 selon son axe longitudinal de telle sorte que la bague de jonction 8 est en liaison hélicoïdale avec la tige 201 sur toute sa longueur. Puis on saisit avec une pince 202 la collerette 82 de la bague de jonction 8 afin de la bloquer en rotation. En vissant la tige 201 en butée contre le plafond de la cavité 55, la bague de jonction 8 se translate vers le bas grâce au filetage de la tige 201. En se translatant vers le bas le long de la tige 201, les languettes 85 sont déformées élastiquement et forcées entre la tige 201 et la paroi latérale 585 du trou 58 jusqu'à ce qu'elles ressortent dans le conduit secondaire 38. La bague de jonction 8 peut alors être retirée librement du bloc 50 et du porte-semelle 3.

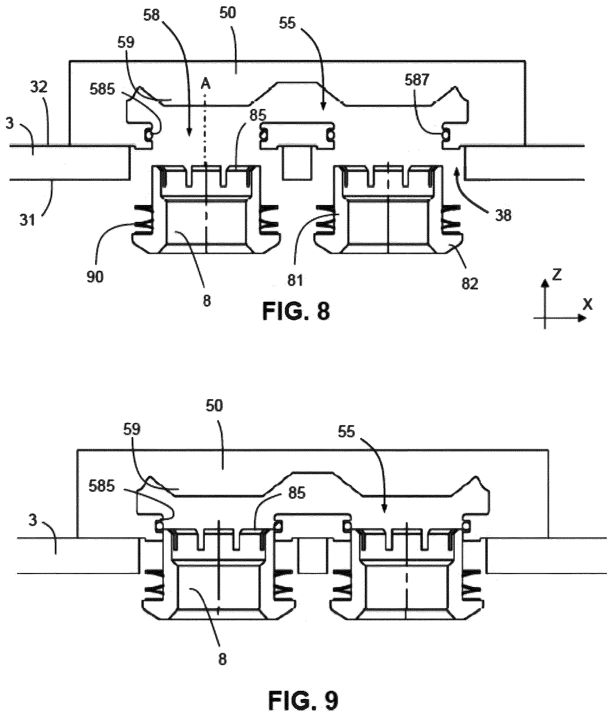

On décrit maintenant un deuxième mode de réalisation, illustré en figures 8 à 12, dans lequel l'extrémité distale du corps 81 porte des languettes 85 qui s'étendent sensiblement dans le prolongement du corps 81 dans leurs positions au repos et qui sont aptes à être déformées plastiquement radialement vers l'extérieur. Les figures 8 à 12 sont des vues en coupe dans le plan (X, Z) de larégion de l'ensemble à friction 1 qui comprend le bloc 50. Par souci de clarté, la semelle 2 n'est pas représentée sur ces figures.

Ainsi, le mécanisme de solidarisation 70 comprend la collerette 82, les languettes 85 et le bord interne du trou 58 de la cavité 55. Le fonctionnement du mécanisme de solidarisation est expliqué ci-après.

Dans chaque trou 58, et dans chaque conduit secondaire 38 aligné avec ce trou 58, on insère une bague de jonction 8 par coulissement selon l'axe A de ce trou 58. Cette insertion s'effectue depuis la face inférieure 31 du porte-semelle, vers le haut sur les figures, et constitue la deuxième étape (étape (b)).

La figure 8 illustre la situation où les bagues de jonction 8 sont insérées dans les conduits secondaires 38 et avant qu'elles commencent à être insérées dans les trous 58.

La figure 9 illustre la situation où les bagues de jonction 8 sont insérées dans les trous 58. Après avoir pénétré dans un trou 58, les languettes 85 et le corps 81 coulissent librement le long de la paroi latérale 585 du trou 58 depuis le bord externe jusqu'au bord interne du trou 58. En effet les languettes 85 s'étendent sensiblement dans le prolongement du corps 81.

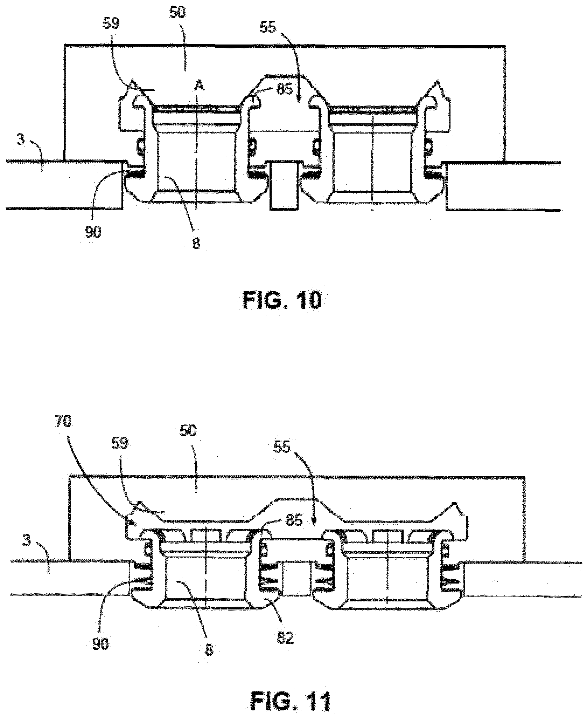

Le plafond de la cavité 55 est muni, en regard de chaque trou 58, d'une protubérance 59 conique en forme de cône, ou de cône tronqué. L'axe de symétrie de cette protubérance 59 est donc aligné avec l'axe A du trou 58. La base de cette protubérance 59 se situe au niveau de ce plafond et son extrémité distale est dirigée vers le trou 58 qui est dans le plancher de la cavité 55. Après que l'extrémité distale de chaque bague de jonction 8 émerge dans la cavité 55, chaque bague 8 continue à coulisser vers le haut jusqu'à ce que les languettes 58 entrent en contact avec la paroi latérale de la protubérance 59 conique. Lorsque chaque bague 8 continue davantage à coulisser vers le haut, les languettes 85 se déforment radialement vers l'extérieur. Cette déformation s'effectue dans le domaine élastique des languettes 85 puis dans leur domaine plastique, de telle sorte que la déformation des languettes 85 depuis leur position initiale rectiligne est permanente. Après cette déformation plastique, les languettes 85 se trouve dans un nouvel état au repos dans lequel leurs extrémités distales sont recourbées radialement vers l'extérieur. La figure 10 illustre cette déformation plastique des languettes 85.

La figure 11 illustre la situation où chacune des bagues de jonction 8 est redescendue jusqu'à ce que les extrémités distales des languettes 85 viennent en contact avec le bord interne d'un trou 58. Ces extrémités distales étant recourbées radialement vers l'extérieur, elles appuient sur le bord interne et empêchent une sortie des bagues de jonction 8 des trous 58 (étape (c), troisième étape). Les languettes 85 et le bord interne du trou 58 font donc partie du mécanisme de solidarisation 70.

Avantageusement, l'ensemble à friction 1 comporte un mécanisme de rappel 90 (dans le cas illustré sur les figures ce mécanisme est un ressort autour de la bague de jonction 8 qui est situé entre la collerette 82 et le bord externe du trou 58. Par exemple ce ressort est hélicoïdal). Lorsque l'extrémité distale d'une bague de jonction 8 émerge dans la cavité 55, ce mécanisme de rappel 90 est activé (le ressort est comprimé) de telle sorte qu'il tend à faire ressortir la bague de jonction 8 du trou 58, c'est-à-dire à pousser la bague de jonction 8 vers le bas, comme illustré en figure 11. La collerette 82 de chaque bague de jonction 8 émerge alors en partie au niveau de la face inférieure 31 du porte-semelle 3.

Lors d'une quatrième étape (étape (d)), on assemble la semelle 2 sur le porte-semelle 3 jusqu'à ce que la semelle 2 recouvre chacune des bagues de jonction 8. Cette situation est similaire à celle illustrée en figure 6 dans le cas du premier mode de réalisation. Le mécanisme de rappel 90 plaque la bague de jonction 8 contre la seconde face 22 de la semelle 2, et les extrémités distales 85 des bagues de jonction 8 sont dans la cavité 55.

Avantageusement, dans le premier et dans le deuxième mode de réalisation, la paroi latérale 585 de chaque trou 58 comporte un joint torique 587 qui est logé dans une cavité annulaire de cette paroi latérale 585. Ce joint torique 587 permet d'améliorer l'étanchéité entre la bague de jonction 8 et le bloc 50.

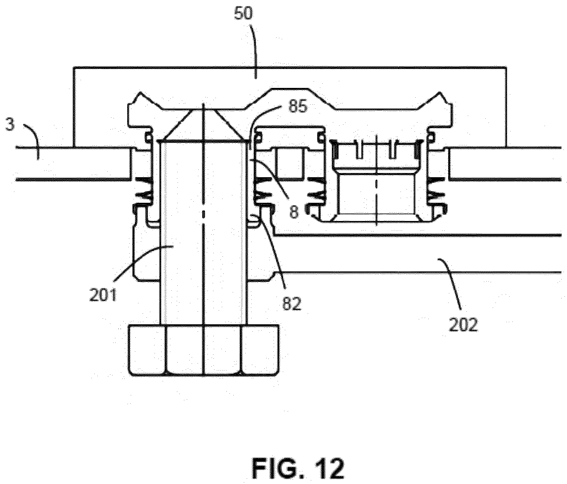

La figure 12 illustre une méthode pour désolidariser une bague de jonction 8 d'avec le bloc 50. On visse une tige filetée 201 dans le trou de la bague de jonction 8 selon son axe longitudinal de telle sorte que la bague de jonction 8 est en liaison hélicoïdale avec la tige 201 sur toute sa longueur. Puis on saisit avec une pince 202 la collerette 82 de la bague de jonction 8 afin de la bloquer en rotation. En vissant la tige 201 en butée contre le plafond de la cavité 55, la bague de jonction 8 se translate vers le bas grâce au filetage de la tige 201. En se translatant vers le bas le long de la tige 201, les languettes 85 sont déformées plastiquement et forcées entre la tige 201 et la paroi latérale 585 du trou 58 jusqu'à ce qu'elles ressortent dans le conduit secondaire 38. La bague de jonction 8 peut alors être retirée librement du bloc 50 et du porte-semelle 3.

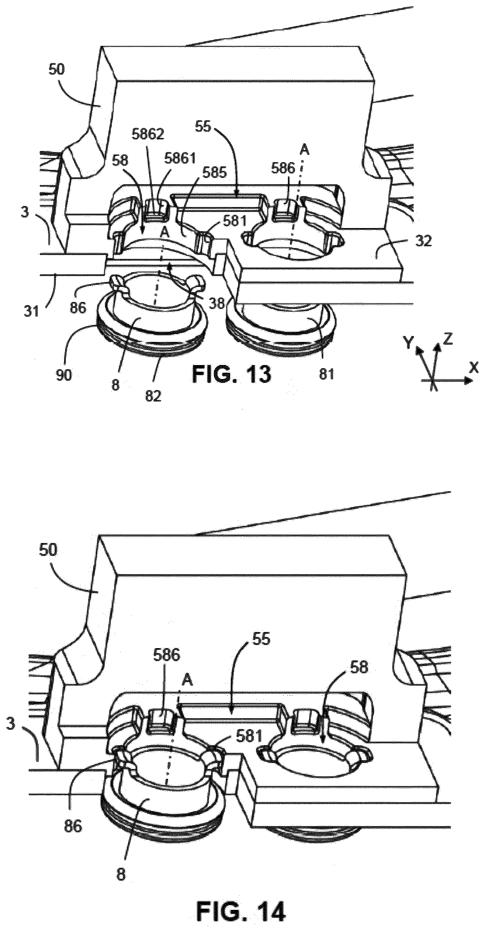

On décrit maintenant un troisième mode de réalisation, illustré en figures 13 à 16, dans lequel l'extrémité distale du corps 81 de chaque bague de jonction 8 porte deux protubérances 86 diamétralement opposées qui s'étendent radialement vers l'extérieur. Chaque trou 58 porte deux rainures 581 diamétralement opposées qui s'étendent longitudinalement le long de sa paroi latérale 585 du bord interne au bord externe du trou 58, de telle sorte que chacune des protubérances 86 est apte à coulisser dans une des rainures 581 lorsque la bague de jonction 8 coulisse dans le trou 58. Le bord de chaque trou 58 comporte un logement 586 qui est apte à recevoir une des protubérances 86. Ce logement 586 s'étend radialement depuis le bord interne du trou 58 et est bordé par une paroi latérale 5861 qui s'étend selon l'axe principal A. Le logement 586 comporte un fond 5862 qui s'étend parallèlement au plancher de la cavité 55. Le logement 586 est ouvert selon l'axe principal A vers le plafond de la cavité 55 et est ouvert radialement vers le trou 58. Les figures 13 à 16 sont des vues en perspective et en coupe partielle dans le plan (X, Z) de la région de l'ensemble à friction 1 qui comprend le bloc 50. Par souci de clarté, sur chacune de ces figures les deux bagues de jonction 8 sont montrées entières, et pour une des bagues de jonction 8 le plan de coupe est translaté selon l'axe transversal Y de façon à montrer la totalité du conduit secondaire 38 et du trou 58 autour de cette bague de jonction 8. Par ailleurs la semelle 2 n'est pas représentée.

Dans le cas général, l'extrémité distale du corps 81 de chaque bague de jonction 8 peut porter une protubérance 86 ou plus de deux protubérances 86. Chaque trou 58 porte autant de rainures 581 que de protubérances 86, ces rainures 581 étant disposées de telle sorte que chacune des protubérances 86 coulisse dans une des rainures 581 lorsque la bague de jonction 8 coulisse dans le trou 58.

Ainsi, le mécanisme de solidarisation 70 comprend la collerette 82, la ou les protubérances 86 et le logement 586. Le fonctionnement du mécanisme de solidarisation est expliqué ci-après.

Dans chaque trou 58, et dans chaque conduit secondaire 38 aligné avec ce trou 58, on insère une bague de jonction 8 par coulissement selon l'axe A de ce trou 58. Cette insertion s'effectue depuis la face inférieure 31 du porte-semelle, vers le haut sur les figures, et constitue la deuxième étape (étape (b)).

La figure 13 illustre la situation où les bagues de jonction 8 sont insérées dans les conduits secondaires 38 et avant qu'elles commencent à être insérées dans les trous 58.

La figure 14 illustre la situation où les bagues de jonction 8 sont insérées dans les trous 58. En pénétrant dans un trou 58, les protubérances 86 coulissent librement dans les rainures 581 depuis le bord externe jusqu'au bord interne du trou 58.

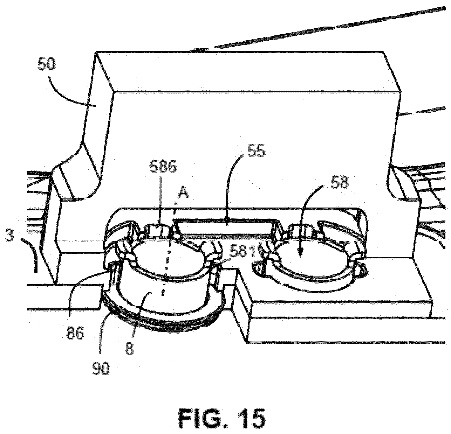

La figure 15 illustre la situation où les protubérances 86 de chaque bague de jonction 8 émergent dans la cavité 55.

Chaque bague de jonction 8 est enfoncée dans le trou 58 et pivotée autour de son axe principal (longitudinal) jusqu'à ce qu'une des protubérances 86 se trouve au-dessus du logement 586. Puis chaque bague de jonction 8 est redescendue jusqu'à ce que cette protubérance 86 se loge dans le logement 586 jusqu'à venir en contact du fond 5862 (étape (c), troisième étape).

Avantageusement, l'ensemble à friction 1 comporte un mécanisme de rappel 90 (dans le cas illustré sur les figures ce mécanisme est un ressort autour de la bague de jonction 8 qui est situé entre la collerette 82 et le bord externe du trou 58. Par exemple ce ressort est hélicoïdal). Lorsque l'extrémité distale d'une bague de jonction 8 émerge dans la cavité 55, ce mécanisme de rappel 90 est activé (le ressort est comprimé) de telle sorte qu'il tend à faire ressortir la bague de jonction 8 du trou 58. Ainsi, le mécanisme de rappel 90 pousse la bague de jonction 8 vers le bas et maintient la protubérance 86 dans le logement 586 de façon à solidariser la bague de jonction 8 avec le bloc 50, comme illustré en figure 16. La collerette 82 de chaque bague de jonction 8 émerge alors en partie au niveau de la face inférieure 31 du porte-semelle 3.

Lors d'une quatrième étape (étape (d)), on assemble la semelle 2 sur le porte-semelle 3 jusqu'à ce que la semelle 2 recouvre chacune des bagues de jonction 8. Cette situation est similaire à celle illustrée en figure 6 dans le cas du premier mode de réalisation. Le mécanisme de rappel 90 plaque la bague de jonction 8 contre la seconde face 22 de la semelle 2, et les protubérances 86 des bagues de jonction 8 sont dans la cavité 55.

Pour désolidariser une bague de jonction 8 d'avec le bloc 50, on la coulisse vers le haut pour retirer la protubérance 86 du logement 586. Puis on pivote la bague de jonction 8 autour de son axe principal jusqu'à ce que les protubérances 86 soient alignées avec les rainures 581. Puis on tire la bague de jonction 8 vers le bas de telle sorte que les protubérances 86 coulissent dans les rainures 581. On retire ensuite librement la bague de jonction 8 du bloc 50 et du porte-semelle 3.

Comme décrit ci-dessus, le procédé de solidarisation avec un bloc 50, relié à un dispositif d'aspiration, d'une bague de jonction 8 est le suivant :
Dans le procédé selon l'invention, le porte-semelle 3 comprend une face inférieure 31, une face supérieure 32, et au moins un conduit secondaire 38 d'axe central A, le bloc 50 fait partie intégrante du porte-semelle 3 au niveau de la face supérieure 32, le porte-semelle 3 et la bague de jonction 8 font partie d'un ensemble à friction 1 pour système de freins à disques ferroviaire pour matériel roulant ferroviaire qui comprend en outre une semelle 2 en matériau de friction comprenant une première face 21 qui est la face de friction, une seconde face 22 qui est apte à être fixée sur la face inférieure 31 par un mécanisme de fixation 4, 5, et au moins un conduit primaire 28 qui relie la première face 21 et la seconde face 22, la au moins une bague de jonction 8 étant agencée dans le au moins un conduit secondaire 38 et établissant une jonction avec le au moins un conduit primaire 28 lorsque le au moins un conduit primaire 28 est aligné avec un du au moins un conduit secondaire 38. Ce procédé comporte les étapes suivantes :
(a) On munit le bloc 50 d'une cavité 55 qui est relié par un circuit 51 au dispositif d'aspiration, d'au moins un trou 58 qui relie la cavité 55 et la face supérieure 32 et qui est aligné avec le au moins un conduit secondaire 38 et dans lequel la au moins une bague de jonction 8 est apte à coulisser;
(b) On agence la au moins une bague de jonction 8 dans le au moins un trou 58 et dans le au moins un conduit secondaire 38 par coulissement selon l'axe A depuis la face inférieure 31;
(c) On solidarise la au moins une bague de jonction 8 avec le bloc 50 au moyen d'un mécanisme de solidarisation 70 ;
(d) On assemble la semelle 2 sur le porte-semelle 3 jusqu'à ce que la semelle 2 recouvre la au moins une bague de jonction 8.

Selon un premier mode de réalisation, la au moins une bague de jonction 8 comporte un corps 81 et une collerette 82 à une première extrémité du corps 81, l'extrémité distale du corps 81 porte des languettes 85 qui s'étendent radialement vers l'extérieur dans leurs positions au repos, de telle sorte que, à l'étape (b), les languettes 85 se rapprochent les unes des autres de façon élastique lorsque le corps 81 coulisse dans le au moins un trou 58 et dans le au moins un conduit secondaire 38, et, à l'étape (c), les languettes 85 reprennent leurs positions au repos et sont aptes à prendre appui contre le bord interne du au moins un trou 58 de la cavité 55. Le mécanisme de solidarisation 70 comprend la collerette 82, les languettes 85 et ledit bord interne du au moins un trou 58.

Selon un deuxième mode de réalisation, la au moins une bague de jonction 8 comporte un corps 81 et une collerette 82 à une première extrémité du corps 81, l'extrémité distale du corps 81 porte des languettes 85 qui s'étendent sensiblement dans le prolongement du corps 81 dans leurs positions au repos, de telle sorte que, à l'étape (b), le corps 81 coulisse librement dans le au moins un trou 58 et dans le au moins un conduit secondaire 38, et, à l'étape (c), on écrase les languettes 85 contre le fond de la cavité de telle sorte que les languettes sont déformées plastiquement radialement vers l'extérieur et sont aptes à prendre appui contre le bord du au moins un trou 58 de la cavité 55. Le mécanisme de solidarisation 70 comprend la collerette 82, les languettes 85 et ledit bord interne du au moins un trou 58.

Selon un troisième mode de réalisation, la au moins une bague de jonction 8 comporte un corps 81 et une collerette 82 à une première extrémité du corps 81, l'extrémité distale du corps 81 porte au moins une protubérance 86 qui s'étend radialement vers l'extérieur, et le au moins un trou 58 porte au moins une rainure 581 dans lequel la au moins une protubérance 86 est apte à coulisser, et le bord interne du au moins un trou 58 comporte un logement 586 apte à recevoir la au moins une protubérance 86 de telle sorte que, à l'étape (b), le corps 81 coulisse librement dans le au moins un trou 58 et dans le au moins un conduit secondaire 38 jusqu'à ce que l'extrémité distale du corps 81 émerge dans ladite cavité 55, et tel que, à l'étape (c), on pivote la bague 8 autour de l'axe principal A jusqu'à ce qu'une de la au moins une protubérance 86 se situe en regard du logement 586, puis on coulisse la bague 8 en sens inverse jusqu'à ce qu'une de la protubérance 86 se loge dans le logement 586 et prenne appui contre le fond du logement 586. Le mécanisme de solidarisation 70 comprend la collerette 82, la au moins une protubérance 86 et le logement 586.

## Revendications

1. Ensemble à friction (1) pour système de freins pour matériel roulant ferroviaire, ledit ensemble à friction (1) comprenant d'une part un porte-semelle (3) comprenant une face inférieure (31), une face supérieure (32) et au moins un conduit secondaire (38) d'axe central A qui relie ladite face inférieure (31) et une face supérieure (32), d'autre part au moins une semelle (2) en matériau de friction comprenant une première face (21) qui est la face de friction, une seconde face (22) qui est apte à être fixée sur ladite face inférieure (31) par un mécanisme de fixation (4, 5), et au moins un conduit primaire (28) qui relie ladite première face (21) et ladite seconde face (22), et d'autre part au moins une bague de jonction (8) qui est agencée dans ledit au moins un conduit secondaire (38) et qui établit une jonction avec ledit au moins un conduit primaire (28) lorsque ledit au moins un conduit primaire (28) est aligné avec ledit au moins un conduit secondaire (38), ledit ensemble à friction (1) comprenant en outre un bloc (50) qui est relié à un dispositif d'aspiration et qui fait partie intégrante dudit porte-semelle (3) au niveau de ladite face supérieure (32), ledit ensemble à friction (1) étant **caractérisé en ce que** ledit bloc (50) présente une cavité (55) qui est reliée par un circuit (51) au dispositif d'aspiration et qui comporte au moins un trou (58) qui relie ladite cavité (55) et ladite face supérieure (32) et qui est aligné avec ledit au moins un conduit secondaire (38) et dans lequel ladite bague de jonction (8) est apte à coulisser, et **en ce qu'**il comporte un mécanisme de solidarisation (70) de ladite au moins une bague de jonction (8) avec ledit bloc (50) lorsque ladite au moins une bague de jonction (8) est agencée dans ledit au moins un trou (58) et dans ledit au moins un conduit secondaire (38).

2. Ensemble à friction (1) selon la revendication 1, dans lequel ladite au moins une bague de jonction (8) comporte un corps (81) et une collerette (82) à une première extrémité dudit corps (81), l'extrémité distale dudit corps (81) portant des languettes (85) qui s'étendent radialement vers l'extérieur dans ladite cavité (55), et dans lequel ledit mécanisme de solidarisation (70) comprend ladite collerette (82), lesdites languettes (85) et le bord interne dudit au moins un trou (58) de ladite cavité (55).

3. Ensemble à friction (1) selon la revendication 1, dans lequel ladite au moins une bague de jonction (8) comporte un corps (81) et une collerette (82) à une première extrémité dudit corps (81), l'extrémité distale dudit corps (81) portant des languettes (85) qui sont déformées plastiquement radialement vers l'extérieur dans ladite cavité (55), et dans lequel ledit mécanisme de solidarisation (70) comprend ladite collerette (82), lesdites languettes (85) et le bord interne dudit au moins un trou (58) de ladite cavité (55).

4. Ensemble à friction (1) selon la revendication 1, dans lequel ladite au moins une bague de jonction (8) comporte un corps (81) et une collerette (82) à une première extrémité dudit corps (81), l'extrémité distale dudit corps (81) portant au moins une protubérance (86) qui s'étend radialement vers l'extérieur dans ladite cavité (55), dans lequel ledit au moins un trou (58) porte au moins une rainure (581) dans lequel ladite au moins une protubérance (86) est apte à coulisser, dans lequel le bord interne dudit au moins un trou (58) de la cavité (55) comporte un logement (586) apte à recevoir ladite protubérance (86) et dans lequel ledit mécanisme de solidarisation (70) comprend ladite collerette (82), ladite protubérance (86) et ledit logement (586).

5. Ensemble à friction (1) selon l'une quelconque des revendications 1 à 4, qui comporte en outre un mécanisme de rappel (90) qui est apte à plaquer ladite bague (8) contre ladite seconde face (22).

6. Ensemble à friction (1) selon l'une quelconque des revendications 1 à 5, dans lequel ledit mécanisme de fixation (4, 5) comporte une glissière d'accueil (5) qui est formé sur ladite face inférieure (31), et un profilé (4) qui est formé sur ladite seconde face (22) et qui est configuré pour coopérer avec ladite glissière d'accueil (5).

7. Procédé pour solidariser au moins une bague de jonction (8) montée sur un porte-semelle (3) avec un bloc (50) relié à un dispositif d'aspiration, ledit porte-semelle (3) comprenant une face inférieure (31), une face supérieure (32), et au moins un conduit secondaire (38) d'axe central A, ledit bloc (50) faisant partie intégrante dudit porte-semelle (3) au niveau de ladite face supérieure (32), ledit porte-semelle (3) et ladite bague de jonction (8) faisant partie d'un ensemble à friction (1) pour système de freins pour matériel roulant ferroviaire, ledit ensemble à friction (1) comprenant en outre une semelle (2) en matériau de friction comprenant une première face (21) qui est la face de friction, une seconde face (22) qui est apte à être fixée sur ladite face inférieure (31) par un mécanisme de fixation (4, 5), et au moins un conduit primaire (28) qui relie ladite première face (21) et ladite seconde face (22), ladite au moins une bague de jonction (8) étant agencée dans ledit au moins un conduit secondaire (38) et établissant une jonction avec ledit au moins un conduit primaire (28) lorsque ledit au moins un conduit primaire (28) est aligné avec un dudit au moins un conduit secondaire (38), ledit procédé étant **caractérisé en ce qu'**il comporte les étapes suivantes :
(a) On munit ledit bloc (50) d'une cavité (55) qui est relié par un circuit (51) au dispositif d'aspiration, d'au moins un trou (58) qui relie ladite cavité (55) et ladite face supérieure (32) et qui est aligné avec ledit au moins un conduit secondaire (38) et dans lequel ladite au moins une bague de jonction (8) est apte à coulisser;
(b) On agence ladite au moins une bague de jonction (8) dans ledit au moins un trou (58) et dans ledit au moins un conduit secondaire (38) par coulissement selon l'axe A depuis ladite face inférieure (31);
(c) On solidarise ladite au moins une bague de jonction (8) avec ledit bloc (50) au moyen d'un mécanisme de solidarisation (70) ;
(d) On assemble ladite semelle (2) sur ledit porte-semelle (3) jusqu'à ce que ladite semelle (2) recouvre ladite au moins une bague de jonction (8).

8. Procédé selon la revendication 7 tel que ladite au moins une bague de jonction (8) comporte un corps (81) et une collerette (82) à une première extrémité dudit corps (81), l'extrémité distale dudit corps (81) portant des languettes (85) qui s'étendent radialement vers l'extérieur dans leurs positions au repos, et tel que, à l'étape (b), lesdites languettes (85) se rapprochent les unes des autres de façon élastique lorsque ledit corps (81) coulisse dans ledit au moins un trou (58) et dans ledit au moins un conduit secondaire (38), et tel que, à l'étape (c), lesdites languettes (85) reprennent leurs positions au repos et sont aptes à prendre appui contre le bord interne dudit au moins un trou (58) de ladite cavité (55), ledit mécanisme de solidarisation (70) comprenant ladite collerette (82), lesdites languettes (85) et ledit bord interne du au moins un trou (58).

9. Procédé selon la revendication 7 tel que ladite au moins une bague de jonction (8) comporte un corps (81) et une collerette (82) à une première extrémité dudit corps (81), l'extrémité distale dudit corps (81) portant des languettes (85) qui s'étendent sensiblement dans le prolongement dudit corps (81) dans leurs positions au repos, de telle sorte que, à l'étape (b), ledit corps (81) coulisse librement dans ledit au moins un trou (58) et dans ledit au moins un conduit secondaire (38), et tel que, à l'étape (c), on écrase lesdites languettes (85) contre le fond de ladite cavité de telle sorte que lesdites languettes sont déformées plastiquement radialement vers l'extérieur et sont aptes à prendre appui contre le bord dudit au moins un trou (58) de ladite cavité (55), ledit mécanisme de solidarisation (70) comprenant ladite collerette (82), lesdites languettes (85) et ledit bord interne du au moins un trou (58).

10. Procédé selon la revendication 7 tel que ladite au moins une bague de jonction (8) comporte un corps (81) et une collerette (82) à une première extrémité dudit corps (81), l'extrémité distale dudit corps (81) portant au moins une protubérance (86) qui s'étend radialement vers l'extérieur, et ledit au moins un trou (58) portant au moins une rainure (581) dans lequel ladite au moins une protubérance (86) est apte à coulisser, et le bord interne dudit au moins un trou (58) comportant un logement (586) apte à recevoir ladite au moins une protubérance (86) de telle sorte que, à l'étape (b), ledit corps (81) coulisse librement dans ledit au moins un trou (58) et dans ledit au moins un conduit secondaire (38) jusqu'à ce que l'extrémité distale dudit corps (81) émerge dans ladite cavité (55), et tel que, à l'étape (c), on pivote ladite bague (8) autour de l'axe principal A jusqu'à ce qu'une de ladite au moins une protubérance (86) se situe en regard dudit logement (586), puis on coulisse ladite bague (8) en sens inverse jusqu'à ce qu'une de ladite protubérance (86) se loge dans ledit logement (586) et prenne appui contre le fond du logement (586), ledit mécanisme de solidarisation (70) comprenant ladite collerette (82), ladite au moins une protubérance (86) et ledit logement (586).

## Patentansprüche

1. Reibungsanordnung (1) für ein Bremssystem für rollendes Eisenbahnmaterial, wobei die Reibungsanordnung (1) aufweist:
einerseits einen Belagträger (3), aufweisend eine untere Fläche (31), eine obere Fläche (32) und mindestens eine Sekundärröhre (38) mit zentraler Achse A, die die untere Fläche (31) und eine obere Fläche (32) miteinander verbindet,
andererseits mindestens einen Belag (2) aus Reibungsmaterial, aufweisend eine erste Fläche (21), die die Reibungsfläche ist, eine zweite Fläche (22), die geeignet ist, an der unteren Fläche (31) mithilfe eines Befestigungsmechanismus (4, 5) befestigt zu werden, und mindestens eine Primärröhre (28), die die erste Fläche (21) und die zweite Fläche (22) miteinander verbindet, und
andererseits mindestens einen Verbindungsring (8), der in der mindestens einen Sekundärröhre (38) angeordnet ist und der eine Verbindung mit der mindestens einen Primärröhre (28) herstellt, wenn die mindestens eine Primärröhre (28) mit der mindestens einen Sekundärröhre (38) ausgerichtet ist,
wobei die Reibungsanordnung (1) ferner einen Block (50) aufweist, der an eine Saugvorrichtung angeschlossen ist und integraler Teil des Belagträgers (3) auf der Ebene der oberen Fläche (32) ist,
wobei die Reibungsanordnung (1) **dadurch gekennzeichnet ist, dass** der Block (50) einen Hohlraum (55) aufweist, der über eine Leitung (51) an die Saugvorrichtung angeschlossen ist und der mindestens eine Öffnung (58) aufweist, die den Hohlraum (55) und die obere Fläche (32) verbindet und die mit der mindestens einen Sekundärröhre (38) ausgerichtet ist und in der der Verbindungsring (8) gleiten kann,
und dadurch, dass sie aufweist: einen Kopplungsmechanismus (70) zum Koppeln des mindestens einen Verbindungsrings (8) mit dem Block (50), wenn der mindestens eine Verbindungsring (8) in der mindestens einen Öffnung (58) und in der mindestens einen Sekundärröhre (38) angeordnet ist.

2. Reibungsanordnung (1) nach Anspruch 1,
in welcher der mindestens eine Verbindungsring (8) einen Körper (81) und einen Kragen (82) an einem ersten Ende des Körpers (81) aufweist, wobei das distale Ende des Körpers (81) Zungen (85) trägt, die in dem Hohlraum (55) sich radial nach außen erstrecken, und
in welcher der Kopplungsmechanismus (70) den Kragen (82), die Zungen (85) und den Innenrand der mindestens einen Öffnung (58) des Hohlraums (55) aufweist.

3. Reibungsanordnung (1) nach Anspruch 1,
in welcher der mindestens eine Verbindungsring (8) einen Körper (81) und einen Kragen (82) an einem ersten Ende des Körpers (81) aufweist, wobei das distale Ende des Körpers (81) Zungen (85) trägt, die in dem Hohlraum (55) radial nach außen plastisch verformt sind, und
in welcher der Kopplungsmechanismus (70) den Kragen (82), die Zungen (85) und den Innenrand der mindestens einen Öffnung (58) des Hohlraums (55) aufweist.

4. Reibungsanordnung (1) nach Anspruch 1,
in welcher der mindestens eine Verbindungsring (8) einen Körper (81) und einen Kragen (82) an einem ersten Ende des Körpers (81) aufweist, wobei das distale Ende des Körpers (81) mindestens einen Vorsprung (86) trägt, der sich in dem Hohlraum (55) radial nach außen erstreckt,
in welcher die mindestens eine Öffnung (58) mindestens eine Rille (581) trägt, in der der mindestens eine Vorsprung (86) gleiten kann,
in welcher der Innenrand der mindestens einen Öffnung (58) des Hohlraums (55) einen Sitz (586) zur Aufnahme des Vorsprungs (86) aufweist, und
in welcher der Kopplungsmechanismus (70) den Kragen (82), den Vorsprung (86) und den Sitz (586) aufweist.

5. Reibungsanordnung (1) nach einem der Ansprüche 1 bis 4, die ferner einen Rückstellmechanismus (90) aufweist, der fähig ist, den Ring (8) gegen die zweite Fläche (22) zu drücken.

6. Reibungsanordnung (1) nach einem der Ansprüche 1 bis 5, in welcher der Befestigungsmechanismus (4, 5) aufweist: eine Aufnahmegleitschiene (5), die an der unteren Fläche (31) gebildet ist, und ein Profil (4), das an der zweiten Fläche (22) gebildet ist und das konfiguriert ist, um mit der Aufnahmegleitschiene (5) zusammenzuwirken.

7. Verfahren zum Koppeln mindestens eines an einem Belagträger (3) angeordneten Verbindungsrings (8) mit einem an eine Saugvorrichtung angeschlossenen Block (50), wobei der Belagträger (3) eine untere Fläche (31), eine obere Fläche (32) und mindestens eine Sekundärröhre (38) mit zentraler Achse A aufweist, der Block (50) integraler Teil des Belagträgers (3) auf der Ebene der oberen Fläche (32) ist, der Belagträger (3) und der Verbindungsring (8) Teil einer Reibungsanordnung (1) für ein Bremssystem für rollendes Eisenbahnmaterial sind, wobei die Reibungsanordnung (1) ferner einen Belag (2) aus Reibungsmaterial aufweist, der eine erste Fläche (21), die die Reibungsfläche ist, eine zweite Fläche (22), die geeignet ist, an der unteren Fläche (31) mithilfe eines Befestigungsmechanismus (4, 5) befestigt zu werden, und mindestens eine Primärröhre (28), die die erste Fläche (21) und die zweite Fläche (22) miteinander verbindet, aufweist, wobei der mindestens eine Verbindungsring (8) in der mindestens einen Sekundärröhre (38) angeordnet ist und eine Verbindung mit der mindestens einen Primärröhre (28) herstellt, wenn die mindestens eine Primärröhre (28) mit einer der mindestens einen Sekundärröhre (38) ausgerichtet ist, wobei das Verfahren **dadurch gekennzeichnet ist, dass** es die folgenden Schritte aufweist:
(a) Versehen des Blocks (50) mit einem Hohlraum (55), der via eine Leitung (51) an die Saugvorrichtung angeschlossen ist, mit mindestens einer Öffnung (58), die den Hohlraum (55) und die obere Fläche (32) verbindet und die mit der mindestens einen Sekundärröhre (38) ausgerichtet ist und in der der mindestens eine Verbindungsring (8) gleiten kann;
(b) Anordnen des mindestens einen Verbindungsrings (8) in der mindestens einen Öffnung (58) und in der mindestens einen Sekundärröhre (38) durch Einschieben von der unteren Fläche (31) aus entlang der Achse A;
(c) Koppeln des mindestens einen Verbindungsrings (8) mit dem Block (50) mithilfe eines Kopplungsmechanismus (70);
(d) Anfügen des Belags (2) an den Belagträger (3), bis der Belag (2) den mindestens einen Verbindungsring (8) bedeckt.

8. Verfahren nach Anspruch 7,
wobei der mindestens eine Verbindungsring (8) einen Körper (81) und einen Kragen (82) an einem ersten Ende des Körpers (81) aufweist, wobei das distale Ende des Körpers (81) Zungen (85) trägt, die sich in ihren Ruhepositionen radial nach außen erstrecken, und
wobei im Schritt (b) die Zungen (85) sich auf elastische Weise einander annähern, wenn der Körper (81) in die mindestens eine Öffnung (58) und in die mindestens eine Sekundärröhre (38) geschoben wird, und
in welchem im Schritt (c) die Zungen (85) ihre Ruhepositionen wieder einnehmen und fähig sind, sich gegen den Innenrand der mindestens einen Öffnung (58) des Hohlraums (55) zu stützen,
wobei der Kopplungsmechanismus (70) den Kragen (82), die Zungen (85) und den Innenrand der mindestens einen Öffnung (58) aufweist.

9. Verfahren nach Anspruch 7,
wobei der mindestens eine Verbindungsring (8) einen Körper (81) und einen Kragen (82) an einem ersten Ende des Körpers (81) aufweist, wobei das distale Ende des Körpers (81) Zungen (85) trägt, die sich in ihren Ruhepositionen im Wesentlichen in Verlängerung des Körpers (81) erstrecken, und
wobei im Schritt (b) der Körper (81) frei in der mindestens einen Öffnung (58) und in der mindestens einen Sekundärröhre (38) gleitet, und
wobei im Schritt (c) die Zungen (85) gegen den Boden des Hohlraums gezwungen werden, so dass die Zungen radial nach außen plastisch verformt werden und fähig sind, sich gegen den Innenrand der mindestens einen Öffnung (58) des Hohlraums (55) zu stützen, wobei der Kopplungsmechanismus (70) den Kragen (82), die Zungen (85) und den Innenrand der mindestens einen Öffnung (58) aufweist.

10. Verfahren nach Anspruch 7,
wobei der mindestens eine Verbindungsring (8) einen Körper (81) und einen Kragen (82) an einem ersten Ende des Körpers (81) aufweist, wobei das distale Ende des Körpers (81) mindestens einen Vorsprung (86) trägt, der sich radial nach außen erstreckt, und die mindestens eine Öffnung (58) mindestens eine Rille (581) trägt, in der der mindestens eine Vorsprung (86) gleiten kann, und der Innenrand der mindestens einen Öffnung (58) einen Sitz (586) aufweist, der geeignet ist, den mindestens einen Vorsprung (86) aufzunehmen,
so dass im Schritt (b) der Körper (81) frei in der mindestens einen Öffnung (58) und in der mindestens einen Sekundärröhre (38) gleitet, bis das distale Ende des Körpers (81) in dem Hohlraum (55) auftaucht, und
wobei im Schritt (c) der Ring (8) um die Hauptachse A gedreht wird, bis einer des mindestens einen Vorsprungs (86) dem Sitz (586) gegenüberliegt, dann der Ring (8) in Gegenrichtung geschoben wird, bis einer der Vorsprünge (86) in dem Sitz (586) sitzt und sich gegen den Boden des Sitzes (586) stützt, wobei der Kopplungsmechanismus (70) den Kragen (82), den mindestens einen Vorsprung (86) und den Sitz (586) aufweist.

## Claims

1. Friction assembly (1) for a braking system for railway rolling stock, said friction assembly (1) comprising a brake head (3) comprising a lower face (31), an upper face (32), and at least one secondary channel (38) of central axis A which connects said lower face (31) and an upper face (32); the break head (3) further comprising at least one plate (2) made of friction material comprising a first face (21) which is the friction face, a second face (22) which is adapted to be fixed on said lower face (31) by a fixing mechanism (4, 5), and at least one primary channel (28) which connects said first face (21) and said second face (22); and furthermore at least one connecting ring (8) which is arranged in said at least one secondary channel (38) and which establishes a connection with said at least one primary channel (28) when said at least one primary channel (28) is aligned with said at least one secondary channel (38), said friction assembly (1) further comprising a manifold block (50) which is connected to a suction device and which forms an integral part of said brake head (3) at said upper face (32), said friction assembly (1) being **characterized in that** said block (50) has a cavity (55) which is connected by a circuit (51) to the suction device and which comprises at least one hole (58) which connects said cavity (55) and said upper face (32) and which is aligned with said at least one secondary channel (38) and in which said connecting ring (8) is able to slide, and **in that** it comprises a securing mechanism (70) for securing said at least one connecting ring (8) to said block (50) when said at least one connecting ring (8) is arranged in said at least one hole (58) and in said at least one secondary channel (38).

2. Friction assembly (1) according to claim 1, wherein said at least one connecting ring (8) comprises a body (81) and a flange (82) at a first end of said body (81), the distal end of said body (81) carrying tabs (85) which extend radially outwards in said cavity (55), and wherein said securing mechanism (70) comprises said flange (82), said tabs (85), and the internal edge of said at least one hole (58) of said cavity (55).

3. Friction assembly (1) according to claim 1, wherein said at least one connecting ring (8) comprises a body (81) and a flange (82) at a first end of said body (81), the distal end of said body (81) carrying tabs (85) which are plastically deformed radially outwards in said cavity (55), and wherein said securing mechanism (70) comprises said flange (82), said tabs (85), and the internal edge of said at least one hole (58) of said cavity (55).

4. Friction assembly (1) according to claim 1, wherein said at least one connecting ring (8) comprises a body (81) and a flange (82) at a first end of said body (81), the distal end of said body (81) carrying at least one protuberance (86) which extends radially outwards in said cavity (55), wherein said at least one hole (58) carries at least one groove (581) within which said at least one protuberance (86) is adapted to slide, wherein the internal edge of said at least one hole (58) of the cavity (55) comprises a housing (586) adapted to receive said protuberance (86), and wherein said securing mechanism (70) comprises said flange (82), said protuberance (86), and said housing (586).

5. Friction assembly (1) according to any one of claims 1 to 4, further comprising a return mechanism (90) which is adapted to press said ring (8) against said second face (22).

6. Friction assembly (1) according to any one of claims 1 to 5, wherein said fixing mechanism (4, 5) comprises a receiving slide (5) which is formed on said lower face (31), and a dovetail section (4) which is formed on said second face (22) and which is configured to engage with said receiving slide (5).

7. Method for securing at least one connecting ring (8) mounted on a brake head (3) to a manifold block (50) connected to a suction device, said brake head (3) comprising a lower face (31), an upper face (32), and at least one secondary channel (38) of central axis A, said block (50) forming an integral part of said brake head (3) at said upper face (32), the brake head (3) and said connecting ring (8) forming part of a friction assembly (1) for a braking system for railway rolling stock, said friction assembly (1) further comprising a plate (2) made of friction material comprising a first face (21) which is the friction face, a second face (22) which is adapted to be fixed to said lower face (31) by a fixing mechanism (4, 5), and at least one primary channel (28) which connects said first face (21) and said second face (22), said at least one connecting ring (8) being arranged in said at least one secondary channel (38) and establishing a connection with said at least one primary channel (28) when said at least one primary channel (28) is aligned with said at least one secondary channel (38), said method being **characterized in that** it comprises the following steps:
(a) Providing said block (50) with a cavity (55) which is connected by a circuit (51) to the suction device, and with at least one hole (58) which connects said cavity (55) and said upper face (32) and which is aligned with said at least one secondary channel (38) and in which said at least one connecting ring (8) is adapted to slide;
(b) Arranging said at least one connecting ring (8) in said at least one hole (58) and in said at least one secondary channel (38) by sliding it along axis A from said lower face (31);
(c) Securing said at least one connecting ring (8) to said block (50) by means of a securing mechanism (70);
(d) Assembling said plate (2) onto said brake head (3) until said plate (2) covers said at least one connecting ring (8).

8. Method according to claim 7, such that said at least one connecting ring (8) comprises a body (81) and a flange (82) at a first end of said body (81), the distal end of said body (81) carrying tabs (85) which extend radially outwards in their rest positions, and such that, in step (b), said tabs (85) approach each other elastically when said body (81) slides in said at least one hole (58) and in said at least one secondary channel (38), and such that, in step (c), said tabs (85) return to their rest positions and are able to bear against the internal edge of said at least one hole (58) of said cavity (55), said securing mechanism (70) comprising said flange (82), said tabs (85), and said internal edge of the at least one hole (58).

9. Method according to claim 7, such that said at least one connecting ring (8) comprises a body (81) and a flange (82) at a first end of said body (81), the distal end of said body (81) carrying tabs (85) which extend substantially as an extension of said body (81) in their rest positions, such that, in step (b), said body (81) slides freely in said at least one hole (58) and in said at least one secondary channel (38), and such that, in step (c), said tabs (85) are crushed against the bottom of said cavity such that said tabs are plastically deformed radially outwards and are able to bear against the edge of said at least one hole (58) of said cavity (55), said securing mechanism (70) comprising said flange (82), said tabs (85), and said internal edge of the at least one hole (58).

10. Method according to claim 7, such that said at least one connecting ring (8) comprises a body (81) and a flange (82) at a first end of said body (81), the distal end of said body ( 81) carrying at least one protuberance (86) which extends radially outwards, and said at least one hole (58) carrying at least one groove (581) in which said at least one protuberance (86) is adapted to slide, and the internal edge of said at least one hole (58) comprising a housing (586) adapted to receive said at least one protuberance (86) such that, in step (b), said body (81) slides freely in said at least one hole (58) and in said at least one secondary channel (38) until the distal end of said body (81) emerges into said cavity (55), and such that, in step (c), said ring (8) is pivoted about the main axis A until one of said at least one protuberance(s) (86) is located facing said housing (586), then said ring is slid (8) in the opposite direction until one of said protuberance(s) (86) is housed in said housing (586) and bears against the bottom of the housing (586), said securing mechanism (70) comprising said flange (82), said at least one protuberance (86), and said housing (586).
